# EUROPÄISCHE PATENTANMELDUNG

(11) **EP 1 243 771 A2**
(43) Veröffentlichungstag der Anmeldung: **25.09.2002**
(21) Anmeldenummer: 02004815.3
(22) Anmeldetag: 02.03.2002
(51) Int. Cl.: F02B 31/06

(54) **Vorrichtung zur Stömungsbeeinflussung der Ansaugluft in einer Brennkraftmaschine**

(30) Priorität: 24.03.2001 DE 10114479
(71) Anmelder: Bayerische Motoren Werke Aktiengesellschaft, 80809 München (DE)
(72) Erfinder: Rubbert, Stephan, Dr., 81737 München (DE); Abdelfattah, Aschraf, Dr., 80939 München (DE)

(57) **Zusammenfassung**

Vorrichtung zur Strömungsbeeinflussung der Ansaugluft in einem Saugkanal einer ventilgesteuerten Brennkraftmaschine mit einem, in Strömungsrichtung vor einem Ventilsitz angeordneten, den Saugkanalquerschnitt mit einer Wirkfläche beeinflussenden Steuerelement, wobei das Steuerelement weitestgehend ringförmig ausgebildet und um die Saugkanallängsachse exzentrisch drehbeweglich angeordnet ist. Diese Lösung zeichnet sich vor allem dadurch aus, dass das Steuerelement in den Saugkanal oder den Zylinderkopf vollständig integriert werden kann, ohne die für die Ansaugluft strömungsoptimierte Geometrie zu verändern. Je nach Lage der Wirkfläche des Steuerelementes, kann die Drallbeeinflussung entweder ganz ausgeschaltet sein oder kontinuierlich zur Verstärkung des Dralls im Brennraum zugeschaltet werden.

## Beschreibung

Die Erfindung betrifft eine Vorrichtung zur Strömungsbeeinflussung der Ansaugluft in einer Brennkraftmaschine gemäss den Merkmalen im Oberbegriff des Patentanspruchs 1.

Derart ausgestaltete Brennkraftmaschinen sind dem Fachmann allgemein bekannt. Die Erfindung geht aus von der deutschen Offenlegungsschrift 29 14 961. In dieser Schrift ist eine Vorrichtung beschrieben, die es erlaubt, die Drallstärke an den Drallbedarf einer Brennkraftmaschine anzupassen. Dies wird dadurch erreicht, dass in dem Einlasskanal oberhalb des Ventilsitzes ein den Kanalquerschnitt beeinflussendes Steuerelement austauschbar bzw. verstellbar angeordnet ist. Mit Hilfe dieser Vorrichtung ist es möglich, den aufgrund von Gusstoleranzen unterschiedlich hohen Drall in den Einlasskanälen bei Zylinderköpfen gleicher Bauart den Drallwert statisch auf den, für diese Brennkraftmaschine optimalen Wert zu korrigieren. Sollte sich mit dem Einsetzen des Steuerelements immer noch nicht der gewünschte Drallbedarf exakt einstellen, so ist es möglich, das Steuerelement nachzuarbeiten.

Nachteilig an der hier beschriebenen Vorrichtung ist, dass die statisch eingestellte Drallbeeinflussung nicht an den aktuellen, betriebspunktabhängigen Drallbedarf der Brennkraftmaschine eingestellt werden kann.

Aufgabe ist es, eine variable Drallbeeinflussung darzustellen, mit der der Drall betriebspunktabhängig regel- oder steuerbar ist.

Diese Aufgabe wird erfindungsgemäß durch die Merkmale des kennzeichnenden Teils des Patentanspruchs 1 gelöst. Diese Lösung zeichnet sich vor allem dadurch aus, dass das Steuerelement in den Saugkanal oder den Zylinderkopf vollständig integriert werden kann, ohne die für die Ansaugluft strömungsoptimierte Geometrie zu verändern. Durch Drehung des Steuerelementes im Saugkanal, wird aufgrund seiner exzentrischen Anordnung bezüglich der Ventilachse eine Abrisskante im Saugkanal generiert. Durch diesen Strömungsabriss im Saugkanal wird eine verstärkte Drallbewegung im Brennraum ermöglicht. Je nach Lage der Wirkfläche des Steuerelementes, kann die Drallbeeinflussung entweder ganz ausgeschaltet sein oder kontinuierlich zur Verstärkung des Dralls im Brennraum zugeschaltet werden.

Gemäss Anspruch 2 können beliebige Drallzahlen im Brennraum eingestellt werden. Drallzahl bezeichnet das Verhältnis von Luftströmungsgeschwindigkeit in Richtung der Zylinderachse zu der tangentialen Luftströmungsgeschwindigkeit (Drall) bezüglich der Zylinderachse. Durch eine Kennfeldregelung kann für jeden Betriebspunkt der Brennkraftmaschine der optimale Drall eingestellt werden.

Vorteilhaft nach Anspruch 3 ist eine gesteuerte bzw. auch eine geregelte (beispielsweise über eine Kennfeldregelung) Lageänderung des Steuerelementes möglich. Eine drehzahl- und oder lastabhängige Steuerelementlage ist somit realisierbar.

Vorteilhaft nach Anspruch 4 kann die Wirkungsweise einer Strömungsabrisskante durch eine zusätzliche Lufteinblasestelle unterstützt werden. Die Wirkungsweise ist besonders wirkungsvoll, wenn die Zusatzluft entgegen der Ansaugluft-Hauptströmungsrichtung eingeblasen wird.

Gemäss Anspruch 5 ist es möglich, bei Brennkraftmaschinen mit zumindest zwei Einlassventilen und geteilten Saugkanälen das Steuerelement in zumindest einen Saugkanal anzuordnen. Wenn eine Drallerzeugung durch das Steuerelement für einen bestimmten Betriebspunkt noch nicht ausreichend sein sollte, dann kann zusätzlich als weitere Maßnahme derjenige Saugkanal ohne Steuerelement durch eine zusätzliche Drosselklappe verschlossen werden, um hierdurch vorteilhaft die Drallerzeugung nochmals zu unterstützen.

Im Folgenden wird die Erfindung anhand eines bevorzugten Ausführungsbeispieles in einer Figur näher beschrieben.

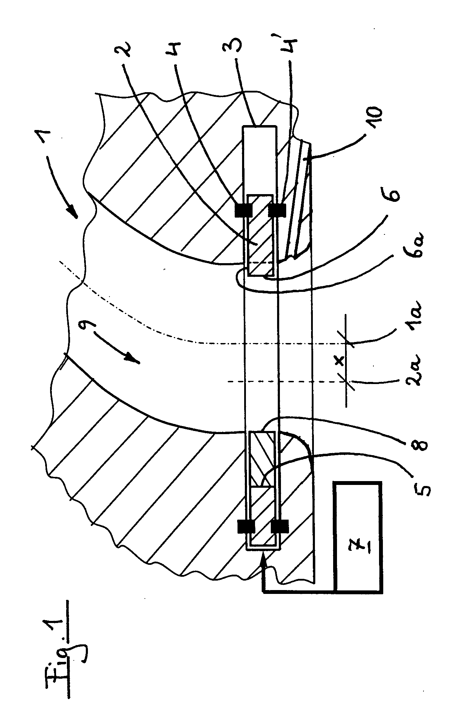

Figur 1 zeigt einen Schnitt durch einen gekrümmten Saugkanal 1 in einem nicht näher dargestellten Zylinderkopf entlang einer Saugkanallängsachse 1a mit einem Steuerelement 2 in einer Ausnehmung 3. In der Ausnehmung 3, die senkrecht zu der Saugkanallängsachse 1a angeordnet ist, ist das Steuerelement 2, um seine Drehachse 2a drehbeweglich, in ringförmigen Lagerelementen 4, 4' gelagert. Die Lagerelemente 4, 4' dienen gleichzeitig als Dichtelemente für den Saugkanal 1. Die Saugkanallängsachse 1a und die Drehachse 2a sind im Bereich der Ausnehmung 3 um ein Maß x von einander beabstandet. Das Maß x kann in einem Bereich von 0,1 mm bis zum halben Saugkanaldurchmesser in der Ebene der Ausnehmung 3 liegen.

Das Steuerelement 2 ist als ringförmige Scheibe mit einer Bohrung 5 ausgeführt, deren Innendurchmesser größer ist als der Innendurchmesser des Saugkanals 1 (ohne Ausnehmung 3) im Bereich der Ausnehmung 3. Die Bohrung 5 in dem Steuerelement 2 ist um das gleiche Maß x konzentrisch zu der Drehachse 2a angeordnet, wie die Saugkanallängsachse 1a und die Drehachse 2a voneinander entfernt sind. Die Bohrung 5 weist einen, von einer Kreisform abweichenden Überstand 6 mit einer Wirkfläche 6a auf, der in den inneren Bereich der Bohrung 5 hineinragt. Der Überstand 6 ragt in der dargestellten Lage auf der Seite mit der starken Oberflächenkrümmung in den Saugkanal 1 hinein. Die Wirkfläche 6a ist die strömungsbeeinflussende Fläche auf dem Überstand 6.

Am Außenumfang des Steuerelementes 2 wirkt ein Stellelement 7 zur Verdrehung des Steuerelementes 2. Es kann ein mechanisch, elektrisch, elektromechanisch oder hydraulisch arbeitendes Stellelement, wie beispielsweise ein Stangengetriebe, ein Elektromotor, ein Elektromotor mit einem Getriebe oder ein Hydraulikelement sein.

Eine sichelmondförmige Scheibe 8 ist in der Bohrung 5 ortsfest zum Saugkanal 1 angeordnet und verschließt die Ausnehmung 3 gegenüber dem Saugkanal 1 konturangepasst, sodass ausschließlich der Überstand 6 in die strömungsoptimierte Form des Saugkanals 1 hineinragt.

Bei hohem Teillast- und Volllastbetrieb der Brennkraftmaschine verdreht das Stellelement 7 das Steuerelement 2 derart, dass der Überstand 6 vollständig in die Ausnehmung 3 integriert ist. Somit existiert für die Ansaugluftströmung, die Hauptströmrichtung ist durch einen Pfeil 9 gekennzeichnet, kein Strömungshindernis, wodurch für die genannten Brennkraftmaschinen-Betriebspunkte eine optimale Zylinderfüllung erreicht wird.

Wird die hohe Teillast reduziert, dann verdreht das Stellelement 7 das Steuerelement 2 derart, dass die Wirkfläche 6a aus der Ausnehmung 3 heraus- und in den Saugkanal 1 hineingeschoben wird. Diese Verstellung kann kontinuierlich erfolgen oder schrittweise. Im unteren Teillastbetrieb der Brennkraftmaschine und im Leerlauf ist das Steuerelement 2 um 180°, wie in der Figur dargestellt, gedreht und die Wirkfläche 6a bildet die maximal mögliche Strömungsabrisskante, wodurch die Drallbewegung der Ansaugluft im Zylinder verstärkt wird, was wiederum zu einer besseren Verbrennung für diese Brennkraftmaschinen-Betriebspunkte führt.

Um die Auswirkung der Wirkfläche 6a nochmals zu verstärken, ist stromab des Steuerelementes 2 ein Lufteinblaskanal 10 für Zusatzluft angeordnet. Durch diesen wird entgegen der Hauptströmrichtung 9 Zusatzluft in den Saugkanal 1 eingeblasen. Der Einblasdruck der Zusatzluft hängt von der gewünschten Strömungsbeeinflussung ab, kann auch ganz ausgeschalten werden. Der Lufteinblaskanal 10 kann an beliebiger Stelle stromab des Steuerelementes 2 am Umfang des Saugkanals 1 angeordnet sein.

Das Steuerelement 2 kann grundsätzlich an jeder Stelle im Saugkanal 1 angeordnet werden; die bevorzugten Stellen sind jedoch direkt vor einem, hier nicht dargestellten Einlassventil, oder am Übergang von einem, hier ebenfalls nicht dargestellten Luftsammler zu dem Saugkanal 1.

### Bezugszeichenliste:

- 1: Saugkanal
- 1a: Saugkanallängsachse
- 2: Steuerelement
- 2a: Drehachse
- 3: Ausnehmung
- 4, 4': Lagerelement
- 5: Bohrung
- 6: Überstand
- 6a: Wirkfläche
- 7: Stellelement
- 8: Scheibe
- 9: Hauptströmrichtung
- 10: Lufteinblaskanal

## Patentansprüche

1. Vorrichtung zur Strömungsbeeinflussung der Ansaugluft in einem Saugkanal einer ventilgesteuerten Brennkraftmaschine mit einem, in Strömungsrichtung vor einem Ventilsitz angeordneten, den Saugkanalquerschnitt mit einer Wirkfläche beeinflussenden Steuerelement,
**dadurch gekennzeichnet, dass** das Steuerelement (2) weitestgehend ringförmig ausgebildet und um die Saugkanallängsachse (1a) exzentrisch drehbeweglich angeordnet ist.

2. Vorrichtung nach Anspruch 1,
**dadurch gekennzeichnet, dass** die Wirkfläche (6a) durch Drehung des Steuerelementes (2) veränderbar ist.

3. Vorrichtung nach den Ansprüchen 1 und 2,
**dadurch gekennzeichnet, dass** die Drehung des Steuerelementes (2) mit einem Stellelement (7) durchführbar ist.

4. Vorrichtung nach zumindest einem der zuvor genannten Ansprüche,
**dadurch gekennzeichnet, dass** eine, das Steuerelement (2) in seiner Wirkung unterstützende Lufteinblasestelle (10) stromabwärts hinter dem Steuerelement (2) angeordnet ist.

5. Vorrichtung nach den Ansprüchen 1 und 4, wobei die ventilgesteuerte Brennkraftmaschine über mindestens zwei Saugkanäle verfügt,
**dadurch gekennzeichnet, dass** das Steuerelement (2) in zumindest einem Saugkanal (1) angeordnet ist.
